# EUROPEAN PATENT APPLICATION

(11) **EP 2 469 324 A1**
(43) Date of publication of application: **27.06.2012**
(21) Application number: 11191933.8
(22) Date of filing: 05.12.2011
(51) Int. Cl.: G02B 27/01

(54) **An embossed reflective volume phase grating for a heads up display system diffractive combiner**

(30) Priority: 22.12.2010 US 975855
(71) Applicant: Delphi Technologies, Inc., Troy, MI 48007 (US)
(72) Inventor: Lambert, David K., Sterling Heights, MI Michigan 48310 (US)
(74) Representative: Denton, Michael John

(57) **Abstract**

A heads up display (HUD (12)) system that includes a light source (14) configured to project an image (20), and a diffractive combiner (16). The diffractive combiner (16) includes one or more reflective volume phase gratings (RVPG (26)), each configured to reflect light from the light source (14) having a distinct wavelength toward a HUD viewer (22). Each RVPG (26) is also embossed with a pattern configured to diffract light at the distinct wavelength so the HUD viewer (22) can see an image (20) in a field of view (24) that passes through the diffractive combiner (16). By forming a diffractive combiner (16) with an RVPG (26) embossed with a particular pattern, the occurrence of rainbow artifacts on the surface of the diffractive combiner (16) caused by random sources of light is reduced.

## Description

### TECHNICAL FIELD OF INVENTION

The invention generally relates to a heads up display (HUD) system, and more particularly relates to a using an embossed reflective volume phase grating (RVPG) as a diffractive combiner for the HUD system.

### BACKGROUND OF INVENTION

Some vehicles such as automobiles and aircraft are equipped with a heads up display (HUD) to assist a vehicle operator with vehicle operation. A known HUD projects a monochromatic image with a light source (e.g. a laser) projected through a liquid crystal display (LCD). The image is projected onto a transparent diffractive combiner located near or within an operator's field of view, for example a forward field of view near a lower portion of the vehicle's forward windshield. The image is viewed by looking through the diffractive combiner. The operator sees a virtual image of the projected image beyond the diffractive combiner that appears to be superimposed over or suspended in the scene outside the vehicle. A known transparent diffractive combiner is formed by pressing a metal master against a surface of a sheet of transparent thermoplastic to form an embossed pattern on the surface of the sheet of transparent plastic. This surface relief pattern is generally configured to diffract a selected wavelength corresponding to the color of light emitted by the light source. With this arrangement, the operator looks through the transparent diffractive combiner to see a virtual image superimposed onto the outside scene. However, it has been observed that such a diffractive combiner also diffracts other colors of light from other sources of light outside the vehicle, and so may create a rainbow artifact on the surface of the combiner and thereby make it difficult to see the image. Such sources of light include overhead street lights, reflections of headlights off buildings or other vehicles, and the sun. It was observed that one system observed was especially susceptible to a source of light incident from about 30 degrees above the field of view horizon.

### SUMMARY OF THE INVENTION

In accordance with one embodiment of this invention, a heads up display (HUD) system is provided. The heads up display (HUD) system includes a light source and a diffractive combiner. The light source is configured to project an image. The diffractive combiner includes a first reflective volume phase grating (RVPG). The RVPG is configured to reflect light from the light source having a first wavelength toward a HUD viewer. Furthermore, the first RVPG is embossed with a first pattern configured to diffract light having the first wavelength in a manner effective for the HUD viewer to see a first image portion of the image characterized as being formed of light having the first wavelength and characterized as being superimposed onto a field of view defined as passing through the diffractive combiner.

In another embodiment of the present invention, a method of forming a diffractive combiner for a HUD system provided. The method includes the step of providing a reflective volume phase grating (RVPG) configured to reflect light having a selected wavelength. Method also includes the step of embossing the RVPG in a manner effective to impart a pattern onto the RVPG effective to diffract light having the selected wavelength.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is a cutaway perspective view of a vehicle equipped with a heads up display (HUD) in accordance with one embodiment;

Fig. 2 is a side view of a HUD in accordance with one embodiment.The three lasers (laser A, laser B, laser C) have three different colours (red, green, blue) to form a colour image

Fig. 3 is a cross section view of a volume phase grating (RVPG) in accordance with one embodiment;

Fig. 4 is a flowchart of method for embossing a RVPG using a holographic master in accordance with one embodiment; and

Fig. 5 is a perspective view of a holographic master for embossing a RVPG by pressing a pattern onto the RVPG in accordance with one embodiment.

### DETAILED DESCRIPTION OF INVENTION

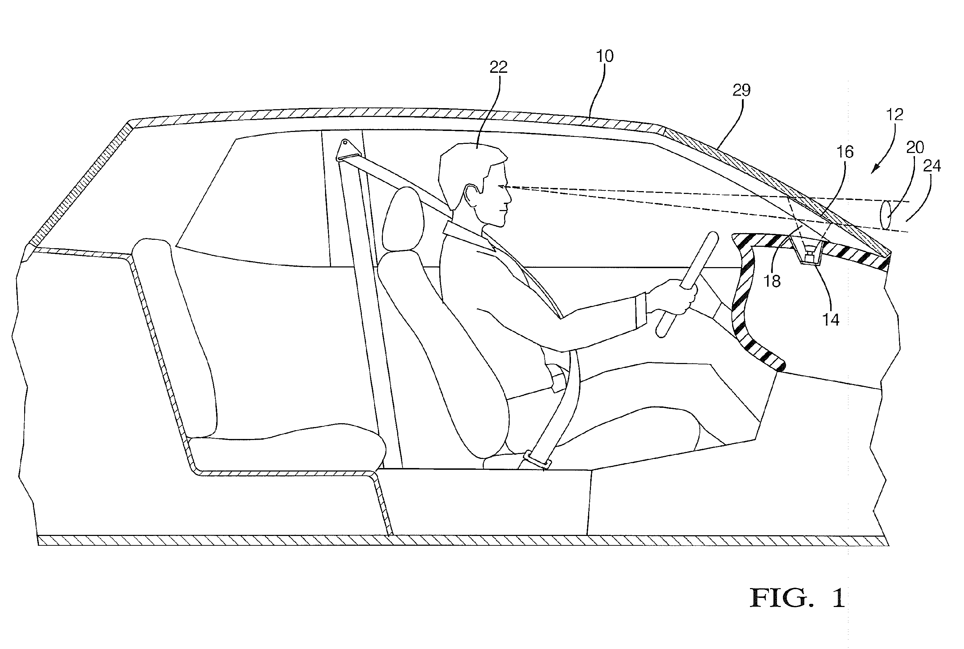

In accordance with an embodiment, Fig. 1 illustrates a vehicle 10 equipped with a heads up display system 12, hereafter HUD 12, that includes a light source 14 and a diffractive combiner 16. The light source 14 is generally configured to project a light beam 18 onto the diffractive combiner 16 so that a HUD viewer 22, illustrated herein as a vehicle operator, perceives an image 20 superimposed onto a field of view 24 that is defined as passing through the diffractive combiner 16.

In one embodiment, the diffractive combiner 16 includes at least one reflective volume phase grating (RVPG). A RVPG is generally configured to only reflect light impinging on the RVPG toward a HUD viewer that impinges at a particular angle and has a selected wavelength. As such, the reflection from the RVPG will generally include a narrow spectrum of wavelengths and so may appear to be monochromatic light, even if the light beam 18 is composed of a broad spectrum of wavelengths, for example white light. As used herein, the term reflective volume phase grating (RVPG) means any optical device formed of material that includes zones of varying indexes of refraction. The RVPG is generally planar in form, typically flat, but optionally curved. The use of the term 'reflective' to characterize the type of volume phase grating generally means that the zones of varying indexes of refraction within the RVPG are arranged to be substantially parallel to the plane of the RVPG. Within the RVPG, the varying of the indexes of refraction would be evident as the distance from the surface the RVPG is varied. This configuration of volume phase grating stands in contrast to other configurations of volume phase gratings, such as a transmission volume phase grating (TVPG) where the variation in indexes of refraction is evident when traversing a path substantially parallel to the surface of the optical device. Examples of RVPG's and TVPG's are illustrated in a publication entitled Volume-Phase Holographic Gratings and Their Potential for Astronomical Applications authored by Samuel C. Barden et al., published on July 9, 1999 in SPIE Proceedings Vol. 3355 - Optical Astronomical Instruments, pp 866-876, the entire disclosure of which is hereby incorporated herein by reference. As illustrated in this reference, RVPG's are generally used to reflect light back to the same side of the optical device as the incident light, while TVPG's are generally used to transmit light through the optical device. The variation in index of refraction may be sinusoidal so that there are no abrupt changes in the index of refraction, or there may be discrete zones formed of layers of alternating index of refraction materials.

While not subscribing to any particularly theory, it has been discovered that for an RVPG to be an effective diffractive combiner for the HUD 12, that is so the image 20 appears to be suspended at a location forward of the diffractive combiner 16, the RVPG is preferably embossed with a pattern configured to diffract light having the same wavelength that is reflected by the RVPG. The resultant structure preferentially interacts with the desired wavelength of light of the light beam 18 that includes image 20, and so operates as a diffractive combiner. A diffractive combiner that includes a RVPG interacts less with other wavelengths or colors of light impinging on the diffractive combiner from unexpected angles, and so reduces the creation of rainbow artifacts when compared to a diffractive combiner that only includes a pattern and does not include an RVPG.

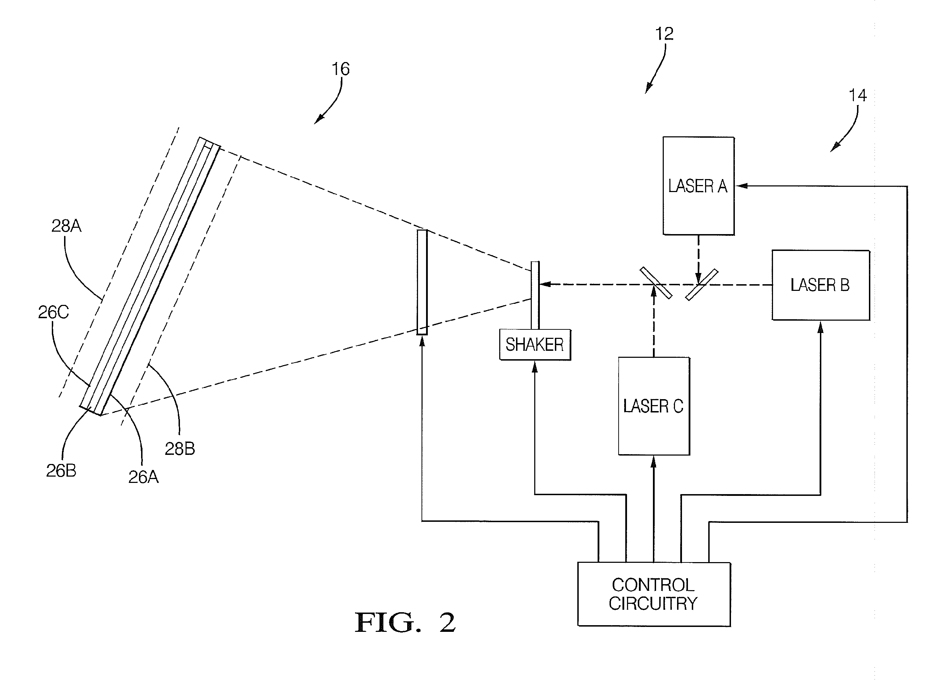

Fig. 2 illustrates a non-limiting example of a heads up display (HUD) 12. The illustration shows the diffractive combiner 16 as having a first reflective volume phase grating (RVPG) 26A, a second RVPG 26B, and a third RVPG 26C.

The light source (14) consists of three lasers (laser A, B, C), to create the three colors (such as red, green, and blue). The "optical system" combines the light from the three lasers into a single beam. The beam is incident on an optical "diffuser" . The diffuser has two functions: It causes the beam to diverge, so it illuminates the entire LCD panel and fills the area of the windshield covered by the holographic optical element. The diffuser is also used to remove speckle that would otherwise detract from the image seen by the viewer. To remove speckle, the diffuser is rapidly moved back (by a shaker) so the viewer's eye sees many speckle patterns that average out, and are not perceived. Typically the shaker operates at a frequency above the range that can be heard (> 20 KHz). It will be appreciated following the description below that the diffractive combiner 16 may include only one or two of the RVPG's depending on the desired spectrum of colors to be displayed by the HUD 12.

In one embodiment, the HUD 12 may include a light source 14 configured to project an image 20, and a diffractive combiner 16 that includes only a first reflective volume phase grating (RVPG) 26A. The first RVPG 26A is generally configured to reflect toward a HUD viewer 22 light that is from the light source 14 having a first wavelength as shown in Fig. 1. By way of further explanation, the light reflected generally impinges on the RVPG from a particular angle and includes light having the first wavelength if it is present in the light beam 18 from the light source 14. Is should be understood that if the light source 14 projects a light beam 18 having a broad spectrum of wavelengths, the light at wavelengths other than the first wavelength will generally pass through and not be reflected by the first RVPG 26A. The first RVPG 26A may be embossed with a first pattern. As will be explained in more detail below, the first pattern is generally configured to diffract light having the first wavelength in a manner effective for the HUD viewer 22 to see a least a first image portion of the image 20 projected by the light source 14. It follows from the description above that the first image portion may be characterized as being formed of light having the first wavelength. The first RVPG 26A and the first pattern cooperate to provide to the HUD viewer 22 an image generally characterized as being superimposed onto a field of view 24 defined as passing through the diffractive combiner 16. With this embodiment, it will be understood that the first image portion seen by the HUD viewer 22 will generally be a monochromatic image, for example the image will be red in color if the first RVPG 26A is configured to reflect red light and the first pattern is configured to diffract red light.

In another embodiment, the HUD 12 may have a diffractive combiner 16 that includes only the first RVPG 26A and a second RVPG 26B. The second RVPG 26B is generally configured to reflect light from the light source 14 toward the HUD viewer 22 that impinges on the second RVPG 26B a particular angle and has a second wavelength. In general, the second wavelength is distinct from the first wavelength, for example corresponding to the color blue. Also, the second RVPG 26B may be embossed with a second pattern distinct from the first pattern. Accordingly, the second pattern may be configured to diffract light having the second wavelength in a manner effective for the HUD viewer 22 to see a second image portion of the image 20 characterized as being formed of light having the second wavelength and characterized as being superimposed onto the field of view. It will be appreciated that with this embodiment that the HUD may be capable of providing images to the HUD viewer 22 that, in accordance with the exemplary colors given above, may be red or blue.

In another embodiment of the HUD 12, the first image portion and the second image portion may be aligned in such a manner as to form a two-color image. In accordance with the exemplary colors given above, the image may be red or blue, or a combination of red and blue, for example purple or violet. It will be appreciated that other wavelengths could be selected for the first wavelength and the second wavelength, and so when the corresponding alternative colors are combined, other colors arising from the combination of light may be displayed.

In still another embodiment, the HUD 12 may include a diffractive combiner 16 that includes the first RVPG 26A, the second RVPG 26B, and a third RVPG 26C configured to reflect light from the light source having a third wavelength toward the HUD viewer. The third wavelength may be distinct from the first wavelength and the second wavelength, for example corresponding to the color green. Furthermore, the third RVPG 26C may be embossed with a third pattern distinct from the first pattern and the second pattern, wherein said third pattern is configured to diffract light having the third wavelength in a manner effective for the HUD viewer to see a third image portion of the image 20 characterized as being formed of light having the third wavelength, for example corresponding to the color green. The third image portion may also be characterized as being superimposed onto the field of view. It will be appreciated that with this embodiment the HUD may be capable of providing images to the HUD viewer 22 that, in accordance with the exemplary colors given above, may be red, or blue, or green.

In another embodiment of the HUD 12, the first image portion, the second image portion, and the third image portion may be aligned to form a three-color image. In accordance with the exemplary colors given above, the image may be red or blue or green, or a combination of red and blue and green. It will be appreciated that with these three colors that are generally considered primary colors for projecting images that when properly aligned may display full color images for viewing by the HUD viewer 22.

Continuing to refer to Fig. 2, the diffractive combiner 16 may also be placed between two layers of transparent material 28A and 28B. These transparent layers 28A and 28B are generally provided to protect the RVPG(s) and the patterns embossed thereon. It will be appreciated that if the transparent layers 28A and/or 28B contact the RVPG, the broad-band reflectivity of the embossed surface may be affected. As such, it may be preferable for the index of refraction of the contacting transparent layers to have an index of refraction approximately the same as the index of refraction of the RVPG. The assembly of the transparent layers and the RVPG(s) may be embedded into a vehicle windshield 29 as suggested in Fig. 1, or may form a stand-alone optical element (not shown) as is known to those skilled in the art of head up displays.

Continuing to refer to Fig. 1 and 2, the configuration of the light source 14 may be one of several configurations, depending on the embodiment of the diffractive combiner 16 present in the HUD 12. For example, if the diffractive combiner 16 has only one RVPG, it may be preferable that the light source 14 emit light only at a wavelength corresponding that which the RVPG is configured to reflect. For this case, the light source may be a light emitting diode (LED) projecting a selected color of light through an array of liquid crystal display (LCD) elements to form a monochromatic image. By limiting the spectrum of light projected to that which the RVPG is configured to reflect, the general efficiency of the HUD is maximized. However, if the diffractive combiner 16 has three RVPG's such as describe above in an embodiment of the HUD, then a white light projecting light through a well known three color LCD display device may be an economical solution. It will be recognized that there are a number of other suitable configurations for the light source 14 known to those skilled in the display arts.

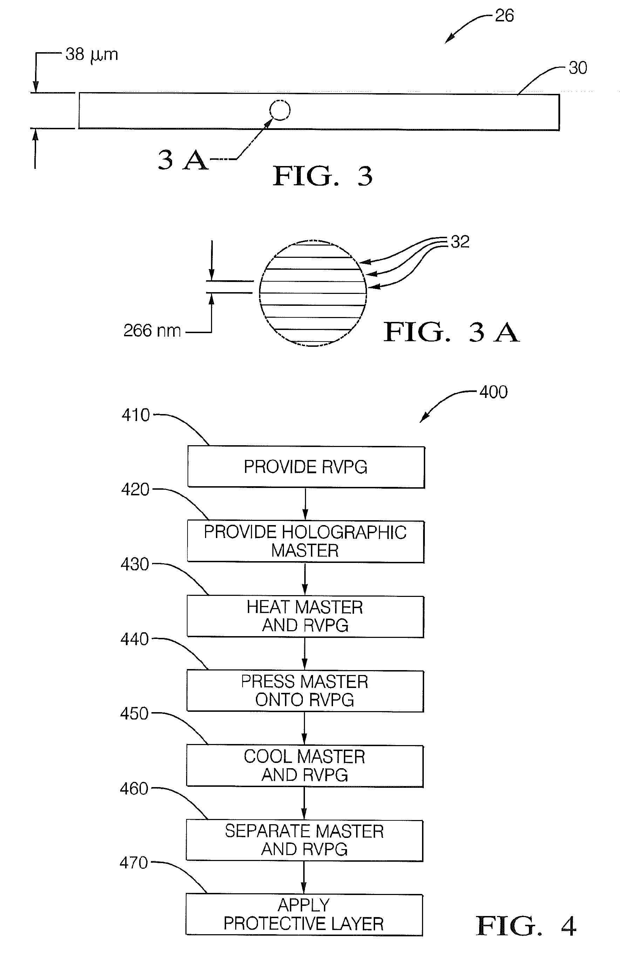

Fig. 3 illustrates a non-limiting example of a volume phase grating (RVPG) 26 prior to being embossed. The RVPG 26 may be formed of a photopolymer film 30, for example DuPont HRF-150 photopolymer film. In this example, the film is 38 micrometers (um) thick and so when exposed to an interference pattern from a laser light source emitting light having a wavelength of 532 nanometers (λ= 532 nm) within the photopolymer material, then about 143 variations or oscillations in the index of refraction are formed through the photopolymer film 30 where planes of maximum index of refraction 32 are spaced apart about 266 nm. A description of this process can be found in Effect of Film Thickness on the Performance of Photopolymers as Holographic Recording Materials by Boyd et al., Applied Optics 39 (2000) 2353, the entire disclosure of which is hereby incorporated herein by reference. Accordingly, a reflective volume phase grating (RVPG) configured to reflect light having a selected wavelength may be provided.

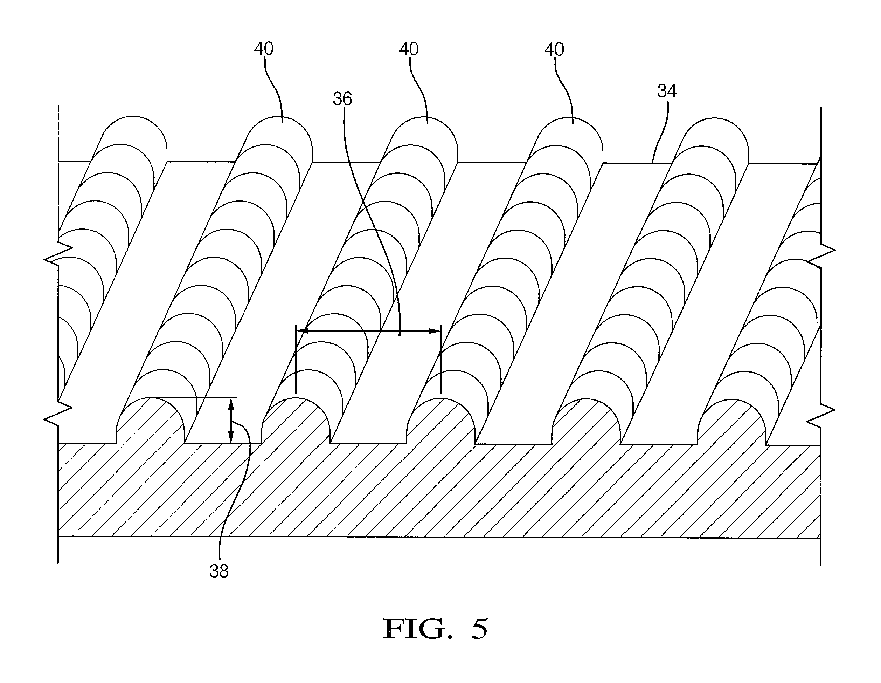

Fig. 4 illustrates a flowchart of method 400 for embossing a RVPG using a holographic master to form a diffractive combiner 16 for a HUD system. Step 410, PROVIDE RVPG, may include forming a RVPG as described above. Step 420, PROVIDE HOLOGRAPHIC MASTER, may include selecting a profile for a holographic master 34 (Fig. 5).

Embossing the RVPG 26 in a manner effective to impart a pattern onto the RVPG effective to diffract light having the selected wavelength may include step 430, HEAT MASTER AND RVPG, where the holographic master 34 and the RVPG are heated to a temperature suitable to soften the photopolymer film 30 so that the pattern of the holographic master 34 may be embossed or impressed onto the photopolymer film 30.

Step 440, PRESS MASTER ONTO RVPG, may include pressing the holographic master 34 onto the RVPG will sufficient pressure so the pattern of the holographic master 34 is embossed or impressed onto the photopolymer film 30. Step 450, COOL MASTER AND RVPG, cools the RVPG 26 so the shape of embossed pattern remains fixed when in step 460, SEPARATE MASTER AND RVPG, the holographic master 34 and the photopolymer film 30 are separated. The method 400 may optionally include step 470, APPLY PROTECTIVE LAYER, where a layer of clear material is applied over the RVPG 26 using known techniques to protect the RVPG 26 as illustrated in Fig. 2.

Fig. 5 illustrates a non-limiting example of a holographic master 34 suitable for embossing the RVPG 26. It should be understood that the surface of the holographic master 34 is generally characterized as having an embossing surface characterized as being a negative of the pattern desired to be embossed onto the RVPG 26. The profile is generally selected to diffract light at a selected wavelength. For example, for light having a 532 nm wavelength, a suitable pitch 36 of ridges 40 forming the pattern for embossing the RVPG 26 varies continuously from about 390 ridges/mm at one edge of the diffractive combiner 16 to about 990 ridges/mm at the opposite edge of the diffractive combiner 16. A suitable ridge height 38 is about 0.4 um. The ridge pitch 36 varies over the surface of the holographic master 34 so that a pattern of grooves on the diffractive combiner 16 has the effect of focusing plane wave fronts incident from the eyes of the HUD viewer 22 toward a focal point coincident with a point on an image plane of the light source 14.

A known way to create such a holographic master involves the interference of two coherent light beams from a laser. The first beam corresponds to parallel wave fronts from a direction corresponding to the direction of the eyes of the HUD viewer 22. The second beam corresponds to diverging spherical wave fronts from a focal point corresponding to a point on the image plane of the light source 14. A photographic process may be used to capture the interference pattern of the light using photo-resist on a glass plate. A developed interference pattern may then used to create a metal master by plating with nickel. Fig. 5 illustrates that the ridges are generally parallel. However it will be recognized that the pattern formed by the ridges is generally determined by the three-dimensional geometric requirements corresponding to the eyes of the HUD viewer 22 and focal point for the light source 14 relative to the diffractive combiner 16.

Accordingly, a head up display system 12 having a diffractive combiner 16 formed by embossing a reflective volume phase grating (RVPG) 26, and a method 400 of forming such a diffractive combiner 16 is provided. By embossing the RVPG 26 with an appropriate pattern, the occurrence of rainbow artifacts on the surface of diffractive combiner 16 is reduced. The embossing process is also suitable to replicate the metal master many times, and thus avoid creating each combiner separately with a holographic exposure process.

While this invention has been described in terms of the preferred embodiments thereof, it is not intended to be so limited, but rather only to the extent set forth in the claims that follow.

## Claims

1. A heads up display (HUD (12)) system comprising:
a light source (14) configured to project an image (20); and
a diffractive combiner (16) comprising a first reflective volume phase grating (RVPG (26)) configured to reflect light from the light source (14) having a first wavelength toward a HUD viewer (22), wherein the first RVPG (26A) is embossed with a first pattern configured to diffract light having the first wavelength in a manner effective for the HUD viewer (22) to see a first image portion of the image (20) characterized as being formed of light having the first wavelength and characterized as being superimposed onto a field of view (24) defined as passing through the diffractive combiner (16).

2. The HUD (12) system in accordance with claim 1, wherein said diffractive combiner (16) further comprises a second RVPG (26B) configured to reflect light from the light source (14) having a second wavelength toward the HUD viewer (22), wherein said second wavelength is distinct from the first wavelength, wherein said second RVPG (26B) is embossed with a second pattern distinct from the first pattern, wherein said second pattern is configured to diffract light having the second wavelength in a manner effective for the HUD viewer (22) to see a second image portion of the image (20) characterized as being formed of light having the second wavelength and characterized as being superimposed onto the field of view (24).

3. The HUD (12) system in accordance with claim 2, wherein the first image portion and the second image portion are aligned to form a two-color image (20).

4. The HUD (12) system in accordance with claim 2, wherein said diffractive combiner (16) further comprises a third RVPG (26C) configured to reflect light from the light source (14) having a third wavelength toward the HUD viewer (22), wherein said third wavelength is distinct from the first wavelength and the second wavelength, wherein said third RVPG (26C) is embossed with a third pattern distinct from the first pattern and the second pattern, wherein said third pattern is configured to diffract light having the third wavelength in a manner effective for the HUD viewer (22) to see a third image portion of the image (20) characterized as being formed of light having the third wavelength and characterized as being superimposed onto the field of view (24).

5. The HUD (12) system in accordance with claim 4, wherein the first image portion, the second image portion, and the third image portion are aligned to form a three-color image (20).

6. A method (400) of forming a diffractive combiner (16) for a HUD (12) system, said method (400) comprising the steps of:
providing (410) a reflective volume phase grating (RVPG (26)) configured to reflect light having a selected wavelength; and
embossing (420-460) the RVPG (26) in a manner effective to impart a pattern onto the RVPG (26) effective to diffract light having the selected wavelength.

7. The method (400) in accordance with claim 6, wherein the step of embossing the RVPG (26) includes the steps of:
providing (420) a holographic master (34) having an embossing surface characterized as being a negative of the pattern;
heating (430) the holographic master (34) to a temperature suitable for embossing the RVPG (26);
pressing (440) the heated holographic master (34) onto a RVPG (26) in a manner effective to form an embossed RVPG (26);
separating (460) the embossed RVPG (26) from the holographic master (34); and
cooling the embossed RVPG (26).

8. The method (400) in accordance with claim 6, wherein the embossed RVPG (26) is placed (470) between two layers of transparent material (28A, 28B).
